# EUROPEAN PATENT APPLICATION

(11) **EP 4 306 491 A1**
(43) Date of publication of application: **17.01.2024**
(21) Application number: 22832774.8
(22) Date of filing: 10.06.2022
(51) Int. Cl.: C03B 37/02, B29B 17/00

(54) **METHOD FOR PRODUCING LONG GLASS FIBERS**

(30) Priority: 29.06.2021 JP 2021107957
(71) Applicant: Nitto Boseki Co., Ltd., Fukushima-shi Fukushima 960-8161 (JP)
(72) Inventor: NUKUI, Yosuke, Fukushima-shi, Fukushima 960-8161 (JP); KOMIYAJI, Eisuke, Tokyo 102-8489 (JP); MOTOYAMA, Kana, Tokyo 102-8489 (JP); KOMUKAI, Tatsuya, Fukushima-shi, Fukushima 960-8161 (JP)
(74) Representative: Schön, Christoph
(86) International application number: PCT/JP2022/023491
(87) International publication number: WO 2023/276617

(57) **Abstract**

Provided is a method for manufacturing glass long fiber that can be produced into resin pellets without clogging of recovered glass fiber in a kneader, when glass fiber recovered from a glass fiber-reinforced resin molded product and a resin are kneaded to prepare resin pellets. In the method for manufacturing glass long fiber of the present invention, a glass raw material including glass fiber recovered from a glass fiber-reinforced resin molded product is melted into molten glass, and the molten glass is spun to form glass long fiber.

## Description

### Technical Field

The present invention relates to a method for manufacturing glass long fiber.

### Background Art

Conventionally, glass fiber-reinforced resin molded products have been widely used as metal substitute materials such as automobile parts, because of their contribution to environmental load reduction as a result of improved fuel efficiency associated with weight reduction.

With a growing interest in recycling in recent years, removing glass fiber from glass fiber-reinforced resin molded products and recycling the same have been considered in view of further reducing environmental loads. A known method for removing glass fiber from glass fiber-reinforced resin molded products includes dry-distilling chips of glass fiber-reinforced plastic wastes at a pyrolysis temperature of 320 to 600°C in a pyrolysis chamber, contacting the decomposition gas after the pyrolysis with water to recover a liquid component of the decomposition product, and also recovering the glass fiber (e.g., see Patent Literature 1).

### Citation List

### Patent Literature

Patent Literature 1: Japanese Patent Laid-Open No. H6-234879

### Summary of Invention

### Technical Problem

However, in manufacturing glass fiber-reinforced resin molded products by inj ection molding using glass fiber recovered from glass fiber-reinforced resin molded products such as glass fiber-reinforced plastic wastes (hereinafter, may be referred to as recovered glass fiber), the workability deteriorates, which is a disadvantage. The deterioration of the workability specifically means that, when recovered glass fiber and a resin are kneaded to produce resin pellets for injection molding, the recovered glass fiber clogs in the kneader and thus resin pellets cannot be produced.

An obj ect of the present invention is, by eliminating the disadvantage, to provide a method for manufacturing glass long fiber that can be produced into resin pellets without clogging of recovered glass fiber in a kneader, when glass fiber recovered from a glass fiber-reinforced resin molded product and a resin are kneaded to prepare resin pellets.

### Solution to Problem

In order to achieve the obj ect, in the method for manufacturing glass long fiber of the present invention, a glass raw material including glass fiber recovered from a glass fiber-reinforced resin molded product (particularly, glass fiber-reinforced thermoplastic resin molded product) is melted to form molten glass and spins the molten glass to form glass long fiber.

According to the method for manufacturing glass long fiber of the present invention, a glass fiber recovered from glass fiber-reinforced resin molded product is mixed with a glass fiber mineral raw material to obtain a glass raw material including the recovered glass fiber. Then, the glass raw material is melted to form molten glass, and the molten glass is spun to form glass long fiber. The glass long fiber thus obtained is cut into a predetermined length to form chopped strands, for example. When the chopped strands and a resin are kneaded to prepare resin pellets, resin pellets can be prepared without clogging in a kneader.

According to studies of the present inventors, the recovered glass fiber includes organic matter derived from the glass fiber-reinforced resin molded product and organic matter used in recovering glass fiber from the glass fiber-reinforced resin molded product remaining in a trace amount on the surface thereof, and the organic matter is considered to affect the manufacturability of glass fiber.

Thus, in the method for manufacturing glass long fiber of the present invention, the glass raw material preferably includes the recovered glass fiber in the range of 1 to 50% by mass based on the entire glass raw material. In the method for manufacturing glass long fiber of the present invention, use of a glass raw material including the recovered glass fiber in the range enables cutting of glass fiber in spinning to be suppressed.

In the method for manufacturing glass long fiber of the present invention, the glass raw material further preferably includes the recovered glass fiber in the range of 5 to 25% by mass based on the entire glass raw material. In the method for manufacturing glass long fiber of the present invention, use of a glass raw material including the recovered glass fiber in the range enables cutting of glass fiber in spinning to be further suppressed.

According to studies of the present inventors, erosion of a furnace material of a melting furnace for use in melting of the glass raw material is considered to be facilitated by the influence of organic matter remaining in a trace amount on the surface of the recovered glass fiber. Due to the influence of organic matter remaining in a trace amount on the surface of the recovered glass fiber, when a platinum bushing for use in spinning of the molten glass is placed in a reducing atmosphere and spinning is conducted in the reducing atmosphere, the platinum bushing is considered to be more easily broken. When erosion of the furnace material of the melting furnace is facilitated, the furnace material components of the melting furnace are more likely to be precipitated from the molten glass, the productivity in spinning of the molten glass is affected, and glass fiber cannot be obtained at a desired cost, which is a problem. When the platinum bushing is broken, platinum foreign matter generated by the breakage will be a factor of cut in spinning, affecting the productivity, which is also a problem.

Thus, in the method for manufacturing glass long fiber of the present invention, the recovered glass fiber preferably has a loss on ignition in the range of 0.003 to 0.300% by mass. In the method for manufacturing glass long fiber of the present invention, when the recovered glass fiber has a loss on ignition in the range, erosion of the furnace material of the melting furnace can be suppressed, and additionally a break of the platinum bushing can be prevented.

Also in the method for manufacturing glass long fiber of the present invention, the loss on ignition of the recovered glass fiber is further preferably in the range of 0.005 to 0.115% by mass. In the method for manufacturing glass long fiber of the present invention, when the recovered glass fiber has a loss on ignition in the range, erosion of the furnace material of the melting furnace can be prevented, and additionally a break of the platinum bushing can be prevented.

### Description of Embodiments

Hereinafter, embodiments of the present invention will be described in detail.

In method for manufacturing glass long fiber of the present embodiment, glass raw material including glass fiber recovered from a glass fiber-reinforced resin molded product is melted to form molten glass, and the molten glass is spun to form glass long fiber.

As the glass fiber-reinforced resin molded product, one obtained by kneading chopped strands constituted by glass filaments of glass fiber bundled and having a predetermined length and a thermoplastic resin in a twin-screw kneader to obtain resin pellets and then conducting injection molding using the obtained resin pellets can be used, for example. The glass fiber-reinforced resin molded product also may be one obtained by a known molding method such as inj ection compression molding method, two-color molding method, hollow molding method, foam molding method (including supercritical fluid foam molding method), insert molding method, in-mold coating molding method, extrusion molding method, sheet molding method, thermoforming method, rotational molding method, laminate molding method, press molding method, blow molding method, stamping molding method, infusion method, hand lay-up method, spray-up method, resin transfer molding method, sheet molding compound method, bulk molding compound method, pultrusion method, and filament winding method.

In the glass fiber-reinforced resin molded product, the glass composition of glass forming the glass fiber is not particularly limited. Examples of the glass composition that may be taken by the glass fiber include the most common E glass composition, a high strength and high modulus glass composition, a high modulus and easily-producible glass composition, and a low dielectric constant and low dielectric tangent glass composition.

The E glass composition here is a composition including SiO₂ in the range of 52.0 to 56.0% by mass, Al₂O₃ in the range of 12.0 to 16.0% by mass, MgO and CaO in the range of 20.0 to 25.0% by mass in total, and B₂O₃ in the range of 5.0 to 10.0% by mass, with respect to the total amount of the glass fiber.

The high strength and high modulus glass composition is a composition including SiO₂ in the range of 60.0 to 70.0% by mass, Al₂O₃ in the range of 20.0 to 30.0% by mass, MgO in the range of 5.0 to 15.0% by mass, Fe₂O₃ in the range of 0 to 1.5% by mass, and Na₂O, K₂O, and Li₂O in the range of 0 to 0.2% by mass in total, with respect to the total amount of the glass fiber.

The high modulus and easily-producible glass composition is a composition including SiO₂ in the range of 57.0 to 60.0% by mass, Al₂O₃ in the range of 17.5 to 20.0% by mass, MgO in the range of 8.5 to 12.0% by mass, CaO in the range of 10.0 to 13.0% by mass, B₂O₃ in the range of 0.5 to 1.5% by mass and including SiO₂, Al₂O₃, MgO, and CaO of 98.0% by mass or more in total, with respect to the total amount of the glass fiber.

The low dielectric constant and low dielectric tangent glass composition is a composition including SiO₂ in the range of 48.0 to 62.0% by mass, B₂O₃ in the range of 17.0 to 26.0% by mass, Al₂O₃ in the range of 9.0 to 18.0% by mass, CaO in the range of 0.1 to 9.0% by mass, MgO in the range of 0 to 6.0% by mass, Na₂O, K₂O, and Li₂O in the range of 0.05 to 0.5% by mass in total, TiO₂ in the range of 0 to 5.0% by mass, SrO in the range of 0 to 6.0% by mass, F₂ and Cl₂ in the range of 0 to 3.0% by mass in total, and P₂O₅ in the range of 0 to 6.0% by mass, with respect to the total amount of the glass fiber.

Examples of the resin forming the glass fiber-reinforced resin molded product can include a thermoplastic resin or a thermosetting resin, but from the viewpoint of recyclability of the resin per se, a thermoplastic resin is preferred. Examples of the thermoplastic resin forming the glass fiber-reinforced resin molded product can include polyethylene, polypropylene, polystyrene, styrene/maleic anhydride resins, styrene/maleimide resins, polyacrylonitrile, acrylonitrile/styrene (AS) resins, acrylonitrile/butadiene/styrene (ABS) resins, chlorinated polyethylene/acrylonitrile/styrene (ACS) resins, acrylonitrile/ethylene/styrene (AES) resins, acrylonitrile/styrene/methyl acrylate (ASA) resins, styrene/acrylonitrile (SAN) resins, methacrylic resins, polyvinyl chloride (PVC), polyvinylidene chloride (PVDC), polyamide, polyacetal, polyethylene terephthalate (PET), polybutylene terephthalate (PBT), polytrimethylene terephthalate (PTT), polycarbonate, polyarylene sulfide, polyethersulfone (PES), polyphenylsulfone (PPSU), polyphenylene ether (PPE), modified polyphenylene ether (m-PPE), polyaryl etherketone, liquid crystal polymer (LCP), fluororesins, polyetherimide (PEI), polyarylate (PAR), polysulfone (PSF), polyamideimide (PAI), polyaminobismaleimide (PABM), thermoplastic polyimide (TPI), polyethylene naphthalate (PEN), ethylene/vinyl acetate (EVA) resins, ionomer (IO) resins, polybutadiene, styrene/butadiene resins, polybutylene, polymethylpentene, olefin/vinyl alcohol resins, cyclic olefin resins, cellulose resins, and polylactic acid.

Examples of the polyethylene can include high density polyethylene (HDPE), medium density polyethylene, low density polyethylene (LDPE), linear low density polyethylene (LLDPE), and ultra high molecular weight polyethylene.

Examples of the polypropylene can include isotactic polypropylene, atactic polypropylene, syndiotactic polypropylene, and mixtures thereof.

Examples of the polystyrene can include general-purpose polystyrene (GPPS), which is an atactic polystyrene having an atactic structure, high impact polystyrene (HIPS) with a rubber component added to GPPS, and syndiotactic polystyrene with syndiotactic structure.

Examples of the methacrylic resin can include polymers obtained by homopolymerizing one of acrylic acid, methacrylic acid, styrene, methyl acrylate, ethyl acrylate, ethyl methacrylate, butyl acrylate, butyl methacrylate, and fatty acid vinyl ester, or polymers obtained by copolymerizing two or more of these.

Examples of the polyvinyl chloride can include a vinyl chloride homopolymer, a copolymer of a vinyl chloride monomer and a copolymerizable monomer, or a graft copolymer obtained by graft polymerization of a vinyl chloride monomer to polymer polymerized by a conventionally known method such as emulsion polymerization method, suspension polymerization method, micro suspension polymerization method, or bulk polymerization method.

Examples of the polyamide can include one of components such as polycaproamide (polyamide 6), polyhexamethylene adipamide (polyamide 66), polytetramethylene adipamide (polyamide 46), polytetramethylene sebacamide (polyamide 410), polypentamethylene adipamide (polyamide 56), polypentamethylene sebacamide (polyamide 510), polyhexamethylene sebacamide (polyamide 610), polyhexamethylene dodecamide (polyamide 612), polydecamethylene adipamide (polyamide 106), polydecamethylene sebacamide (polyamide 1010), polydecamethylene dodecamide (polyamide 1012), polyundecanamide (polyamide 11), polyundecamethylene adipamide (polyamide 116), polydodecanamide (polyamide 12), polyxylene adipamide (polyamide XD6), polyxylene sebacamide (polyamide XD10), polymetaxylylene adipamide (polyamide MXD6), polyparaxylylene adipamide (polyamide PXD6), polytetramethylene terephthalamide (polyamide 4T), polypentamethylene terephthalamide (polyamide 5T), polyhexamethylene terephthalamide (polyamide 6T), polyhexamethylene isophthalamide (polyamide 61), polynonamethylene terephthalamide (polyamide 9T), polydecamethylene terephthalamide (polyamide 10T), polyundecamethylene terephthalamide (polyamide 11T), polydodecamethylene terephthalamide (polyamide 12T), polytetramethylene isophthalamide (polyamide 4I), polybis(3-methyl-4-aminohexyl) methane terephthalamide (polyamide PACMT), polybis(3-methyl-4-aminohexyl) methane isophthalamide (polyamide PACMI), polybis(3-methyl-4-aminohexyl) methane dodecamide (polyamide PACM12), polybis(3-methyl-4-aminohexyl)methanetetradecamide (polyamide PACM14), or a copolymer obtained by a combination of a plurality of components of two or more thereof, or a mixture thereof.

Examples of the polyacetal can include a homopolymer with oxymethylene units as the main repeating unit, and a copolymer mainly consisting of oxymethylene units and containing oxyalkylene units having 2 to 8 adjacent carbon atoms in the main chain.

Examples of the polyethylene terephthalate can include a polymer obtained by polycondensation of terephthalic acid or a derivative thereof with ethylene glycol.

Examples of the polybutylene terephthalate can include a polymer obtained by polycondensation of terephthalic acid or a derivative thereof with 1,4-butanediol.

Examples of the polytrimethylene terephthalate can include polymers obtained by polycondensation of terephthalic acid or a derivative thereof with 1,3-propanediol.

Examples of the polycarbonate can include polymers obtained by a transesterification method in which a dihydroxydiaryl compound is reacted with a carbonate such as diphenyl carbonate in a molten state; or polymers obtained by phosgene method in which a dihydroxyaryl compound is reacted with phosgene.

Examples of the polyarylene sulfide can include linear polyphenylene sulfide, cross linked polyphenylene sulfide having a high molecular weight obtained by performing a curing reaction after polymerization, polyphenylene sulfide sulfone, polyphenylene sulfide ether, and polyphenylene sulfide ketone.

Examples of the modified polyphenylene ether can include: a polymer alloy of poly(2,6-dimethyl-1,4-phenylene)ether and polystyrene; a polymer alloy of poly(2,6-dimethyl-1,4-phenylene)ether and a styrene/butadiene copolymer, a polymer alloy of poly(2,6-dimethyl-1,4-phenylene)ether and a styrene/maleic anhydride copolymer; a polymer alloy of poly(2,6-dimethyl-1,4-phenylene)ether and polyamide; and a polymer alloy of poly(2,6-dimethyl-1,4-phenylene)ether and styrene/butadiene/acrylonitrile copolymer.

Examples of the polyaryl etherketone can include polyetherketone (PEK), polyetheretherketone (PEEK), polyetherketoneketone (PEKK), and polyetheretherketoneketone (PEEKK).

Examples of the liquid crystal polymer (LCP) include a polymer (copolymer) composed of one or more structural units selected from aromatic hydroxycarbonyl units which are thermotropic liquid crystal polyesters, aromatic dihydroxy units, aromatic dicarbonyl units, aliphatic dihydroxy units, aliphatic dicarbonyl units, and the like.

Examples of the fluororesin can include polytetrafluoroethylene (PTFE), perfluoroalkoxy resins (PFA), fluorinated ethylene propylene resins (FEP), fluorinated ethylene tetrafluoroethylene resins (ETFE), polyvinyl fluoride (PVF), polyvinylidene fluoride (PVDF), polychlorotrifluoroethylene (PCTFE), and ethylene/chlorotrifluoroethylene resin (ECTFE).

Examples of the ionomer (IO) resin can include copolymers of an olefin or a styrene and an unsaturated carboxylic acid, wherein a part of carboxyl groups is neutralized with a metal ion.

Examples of the olefin/vinyl alcohol resin can include ethylene/vinyl alcohol copolymers, propylene/vinyl alcohol copolymers, saponified products of ethylene/vinyl acetate copolymers, and saponified products of propylene/vinyl acetate copolymers.

Examples of the cyclic olefin resin can include monocyclic compounds such as cyclohexene, polycyclic compounds such as tetracyclopentadiene, and polymers of cyclic olefin monomers.

Examples of the polylactic acid can include poly-L-lactic acid which is a homopolymer of L-form, poly-D-lactic acid which is a homopolymer of D-form, or a stereocomplex polylactic acid which is a mixture thereof.

Examples of the cellulose resin can include methylcellulose, ethyl cellulose, hydroxy cellulose, hydroxymethylcellulose, hydroxyethyl cellulose, hydroxyethyl methylcellulose, hydroxypropylmethylcellulose, cellulose acetate, cellulose propionate, and cellulose butyrate.

Examples of the thermosetting resin forming the glass fiber-reinforced resin molded product of the present embodiment can include unsaturated polyester resins, vinyl ester resins, epoxy (EP) resins, melamine (MF) resins, phenol resins (PF), urethane resins (PU), polyisocyanate, polyisocyanurate, polyimide (PI), urea (UF) resins, silicone (SI) resins, furan (FR) resins, benzoguanamine (BR) resins, alkyd resins, xylene resins, bismaleimide triazine (BT) resins, and diallyl phthalate resin (PDAP).

The glass fiber-reinforced resin molded product may include various additives in addition to the glass fiber and resin. Examples of the various additives can include a flame retardant, a colorant, a mold release agent, an antioxidant, a UV absorber, an antistatic agent, a nucleating agent, a plasticizer, a filler, and a modifier.

Examples of the flame retardant include phosphorus-based flame retardants such as non-halogen phosphate esters, halogen-containing phosphate esters, non-halogen condensed phosphate esters, halogen-containing condensed phosphate esters, polyphosphate salts, and red phosphorus, bromine-based flame retardants such as TBA (tetrabromobisphenol A), DBDPO (decabromodiphenyl ether), OCTA (octabromodiphenyl oxide), and TBP (tribromophenol), and inorganic flame retardants such as aluminum hydroxide, antimony trioxide, tin oxide, tin hydroxide, molybdenum oxide, antimony pentoxide, and magnesium hydroxide.

Examples of the colorant include titanium oxide, zinc oxide, zinc sulfide, and carbon black.

Examples of the mold release agent can include magnesium stearate, stearic acid talc, metal soap, polyethylene wax, ethylene-bis-stearic amide, EDA (ethylenediamine), EBA (ethylene-bis-stearic acid amide), lithium stearate, and higher fatty acid metal salts.

Example of the antioxidant can include phenolic antioxidants, amine-based antioxidants, sulfur-based antioxidants, and phosphorus-based antioxidants.

Examples of the UV absorber can include salicylate-based UV absorbers, benzophenonebased UV absorbers, benzotriazole-based UV absorbers, cyanoacrylate-based UV absorbers, nickel chelate-based UV absorbers, and hindered amine-based UV absorbers.

Examples of the antistatic agent can include anionic surfactants, cationic surfactants, nonionic surfactants, and amphoteric surfactants.

Examples of the nucleating agent can include talc, dibenzylidene sorbitol, and a β-crystal nucleating agent.

Examples of the plasticizer can include phthalic acid-based plasticizers (DOP (dioctyl phthalate), DBP (dibutyl phthalate), DHP (diheptyl phthalate), DIDP (diisodecyl phthalate), and DINP (diisononyl phthalate)), fatty acid-based plasticizers, phosphoric acid-based plasticizers (such as TCP (tricresyl phosphate), TMP (trimethyl phosphate), and TEP (triethyl phosphate)), adipic acid-based plasticizers (DOA (dioctyl adipate), DINA (diisononyl adipate), and DIDA (diisodecyl adipate)), polyester-based plasticizers, and epoxy-based plasticizers.

Examples of the filler can include talc, mica, glass flakes, glass beads, and calcium carbonate.

Examples of the modifier can include polybutadiene, a styrene-butadiene copolymer, a styrene-butadiene-styrene block copolymer, an acrylonitrile-butadiene-styrene copolymer, a methyl methacrylate-butadiene-styrene copolymer, a methyl methacrylate-acrylonitrile-butadiene-styrene copolymer, a methyl methacrylate-butadiene copolymer, an acrylonitrile-styrene-acryl rubber copolymer, an acrylonitrile-ethylene propylene rubber-styrene copolymer, a methyl methacrylate-acryl rubber copolymer, a methyl methacrylate-acryl rubber-styrene copolymer, a methyl methacrylate-acryl-butadiene rubber copolymer, a methyl methacrylate-acryl-butadiene rubber-styrene copolymer, a methyl methacrylate-(acryl-silicone IPN rubber) copolymer, and natural rubber.

The glass fiber can be recovered from the glass fiber-reinforced resin molded product, for example, by heating the glass fiber-reinforced resin molded product under a condition of 450 to 800°C for 0.5 to 8 hours to burn the thermoplastic resin included in the glass fiber-reinforced resin molded product, or by dissolving the resin included in the glass fiber-reinforced resin molded product in a solvent such as benzyl alcohol.

The glass fiber recovered as mentioned above (recovered glass fiber) includes organic matter derived from the glass fiber-reinforced resin molded product and organic matter used in recovering glass fiber from the glass fiber-reinforced resin molded product remaining in a trace amount on the surface thereof. In the recovered glass fiber, the loss on ignition is, for example, in the range of 0.001 to 0.500% by mass, preferably in the range of 0.002 to 0.400% by mass, more preferably in the range of 0.003 to 0.300% by mass, still more preferably in the range of 0.004 to 0.200% by mass, markedly preferably in the range of 0.005 to 0.115% by mass, particularly preferably in the range of 0.010 to 0.100% by mass, especially preferably in the range of 0.015 to 0.075% by mass, and most preferably in the range of 0.020 to 0.060% by mass.

Here, the loss on ignition indicates the amount of organic matter remaining in a trace amount on the surface of the recovered glass fiber and can be measured according to JIS R3420:2013.

The number average fiber length of the recovered glass fiber is in the range of 5 to 5000 µm, for example. From the viewpoint of meltability after charging into a melting furnace, the number average fiber length of the recovered glass fiber is preferably in the range of 10 to 500 µm, more preferably in the range of 15 to 500 µm, still more preferably in the range of 20 to 450 µm, markedly preferably in the range of 25 to 400 µm, particularly preferably in the range of 30 to 350 µm, especially preferably in the range of 35 to 330 µm, and most preferably in the range of 40 to 300 µm. The recovered glass fiber, after recovered from the glass fiber-reinforced resin molded product may be pulverized to a predetermined length in a pulverizer such as ball mill. The number average fiber length of the recovered glass fiber means the number average fiber length of the recovered glass fiber after pulverization.

Here, the number average fiber length of the recovered glass fiber can be calculated by the following method. First, the recovered glass fiber is transferred to a glass petri dish, and the recovered glass fiber is dispersed using acetone on the surface of the petri dish. Subsequently, the fiber length of 1000 or more recovered glass fibers dispersed on the petri dish surface is measured using a stereoscopic microscope, and the average value thereof is determined to calculate the number average fiber length of the recovered glass fiber.

The recovered glass fiber may include inorganic matter derived from additives contained in the glass fiber-reinforced resin molded product in a trace amount on the surface thereof.

In the method for manufacturing glass long fiber of the present embodiment, the glass raw material includes the glass fiber recovered from the glass fiber-reinforced resin molded product and a glass fiber mineral material.

Here, the glass fiber mineral material is constituted by a material purified from plural types of ores or a material purified from ores (may be referred to as an ore-derived purified material). The type of ores or a material purified from ores and the content ratio of each ore or material purified from ores are determined so as to achieve a desired glass composition (may be referred to as a designed glass composition), as a whole, based on the components contained in the ores or the purified material derived from ores.

Examples of the ore can include silica sand, feldspar, clay, and limestone. Examples of the ore-derived purified material can include silica powder, dolomite, talc, clay, alumina, and soda ash.

In the case of comparison of the glass composition of the recovered glass fiber with the designed glass composition of the glass fiber mineral material, the differences in the contents of SiO₂, Al₂O₃, CaO, MgO, StO, B₂O₃, and TiO₂ each are preferably less than 5.00% by mass more preferably less than 3.00% by mass, still more preferably less than 1.50% by mass, particularly preferably less than 1.00% by mass, and most preferably less than 0.50% by mass. From the viewpoint of achievement of industrial glass fiber manufacturing in the case of comparison of the glass composition of the recovered glass fiber with the designed glass composition of the glass fiber mineral material, the total value of the absolute values of the differences in the contents of SiO₂, Al₂O₃, CaO, MgO, StO, B₂O₃, and TiO₂ is, for example, in the range of 0.01 to 10.00% by mass, preferably in the range of 0.05 to 9.00% by mass, more preferably in the range of 0.10 to 8.00% by mass, still more preferably in the range of 0.20 to 7.00% by mass, particularly preferably in the range of 0.40 to 6.00% by mass, and most preferably in the range of 0.60 to 5.00% by mass.

Here, in the glass composition of the recovered glass fiber, the content of Li as the light element can be measured with an ICP emission spectroscopic analyzer, and the contents of the other elements can be measured with a wavelength dispersive X-ray fluorescence analyzer.

As the measurement method, first, the recovered glass fiber is placed in a platinum crucible and melted with stirring while being held at a temperature of 1550°C for 6 hours in an electric furnace to obtain a homogeneous molten glass. Next, the obtained molten glass is poured onto a carbon plate to produce a glass cullet, and then pulverized and powdered into glass powder. Regarding Li as a light element, the resulting glass powder is thermally decomposed with an acid and then quantitatively analyzed using an ICP emission spectroscopic analyzer. Regarding other elements, the glass powder is molded into a disc shape by a pressing machine and then quantitatively analyzed using a wavelength dispersive X-ray fluorescence analyzer. These quantitative analysis results are converted in terms of oxides to calculate the content of each component and the total amount, and the content of each component of the glass composition can be determined from these numerical values.

The glass raw material may contain glass long fiber manufactured using only a glass fiber mineral material and discarded due to a trouble or the like in the manufacturing process.

In the method for manufacturing glass long fiber of the present embodiment, the glass raw material includes the recovered glass fiber preferably in the range of 1 to 50% by mass based on the entire glass raw material, more preferably in the range of 1 to 25% by mass based on the entire glass raw material, still more preferably in the range of 5 to 25% by mass based on the entire glass raw material, particularly preferably in the range of 6 to 20% by mass based on the entire glass raw material, and most preferably in the range of 7 to 15% by mass based on the entire glass raw material.

In the method for manufacturing glass long fiber of the present embodiment, next, the glass composition, as a glass raw material (glass batch), is supplied to a melting furnace and melted at a temperature in the range of 1400 to 1550°C, for example. Then, the molten glass batch (molten glass) is drawn from nozzle tips of a platinum bushing, the number of which is in the range of 1 to 30000, controlled at a predetermined temperature and rapidly cooled to form glass filaments. Subsequently, the glass filaments formed are applied with a sizing agent or binder using an applicator as an application apparatus. While the glass filaments in the range of 1 to 30000 are bundled using a bundling shoe, the glass filaments are wound on a tube at a high speed using a winding apparatus to enable glass fiber to be obtained. Here, allowing the nozzle tip to have a non-circular shape and have a protrusion or a notch for rapidly cooling the molten glass and controlling the temperature condition can provide glass long fiber constituted by glass filaments having a flat cross-sectional shape.

The glass long fiber obtained by the manufacturing method of the present embodiment has a length of at least 1000 m more.

The converted fiber diameter of a glass filament constituting the glass long fiber obtained by the manufacturing method of the present embodiment is, for example, in the range of 3.0 to 100.0 µm, preferably in the range of 4.0 to 70.0 µm, more preferably in the range of 5.0 to 50.0 µm, still more preferably in the range of 6.5 to 40.0 µm, and particularly preferably in the range of 7.0 to 30.0 µm. The converted fiber diameter of the glass filament here means the diameter of a perfect circle having an area equivalent to the area of the cross-sectional shape of the glass filament. The cross section of the glass filament means a transverse cross section perpendicular to the fiber length direction of the glass fiber.

The cross-sectional shape of a glass filament constituting the glass long fiber obtained by the manufacturing method of the present embodiment is usually circular. When the glass filament has a flat cross-sectional shape, examples of the shape include long oval, ellipse, and rectangle. The long oval here means a rectangular shape of which short sides each are replaced with a semicircle having a diameter equivalent to the short sides.

When the glass filament constituting the glass long fiber obtained by the manufacturing method of the present embodiment has a flat cross-sectional shape, the ratio of the major axis to the minor axis in the cross section (major axis/minor axis) is, for example, in the range of 2.0 to 10.0 and preferably in the range of 3.0 to 8.0.

The glass long fiber obtained by the manufacturing method of the present embodiment can be processed into various forms. Examples of the form that may be taken by the glass long fiber obtained by the manufacturing method of the present embodiment after processed can include chopped strands obtained by cutting glass long fiber having the number of glass filaments constituting the glass long fiber (number bundled) (also referred to as a glass fiber bundle or glass strand) of preferably 1 to 20000, more preferably 50 to 10000, and still more preferably 200 to 8000 into a length of preferably 1.0 to 100.0 mm, more preferably 1.2 to 51.0 mm, still more preferably 1.5 to 30.0 mm, particularly preferably 2.0 to 15.0 mm, and most preferably 2.3 to 7.8 mm. Examples of the form that may be taken by the glass long fiber obtained by the manufacturing method of the present embodiment after processed can also include rovings, in which the number of glass filaments constituting the glass long fiber is 10 to 30000 and which are obtained without cutting, and cut fiber, in which the number of glass filaments constituting the glass long fiber is 1 to 20000 and which is obtained by pulverization so as to have a length of 0.001 to 0.900 mm by a known method such as a ball mill or Henschel mixer, in addition to chopped strands.

A glass fiber-reinforced resin molded product can be obtained by processing the glass long fiber obtained by the manufacturing method of the present embodiment into, for example, chopped strands, kneading the chopped strands and a thermoplastic resin in a twin-screw kneader, and conducting inj ection molding using the obtained resin pellets. The glass fiber-reinforced resin molded product also may be obtained by a known molding method such as inj ection compression molding method, two-color molding method, hollow molding method, foam molding method (including supercritical fluid foam molding method), insert molding method, in-mold coating molding method, extrusion molding method, sheet molding method, thermoforming method, rotational molding method, laminate molding method, press molding method, blow molding method, stamping molding method, infusion method, hand lay-up method, spray-up method, resin transfer molding method, sheet molding compound method, bulk molding compound method, pultrusion method, and filament winding method.

The glass fiber-reinforced resin molded product can be used in, for example, housings and parts such as frames of portable electronic devices including smartphones, automobile electrical parts such as battery tray covers, sensors, and coil bobbins, electronic device parts other than those for portable electronic devices, and electrical connecting terminal parts.

The glass long fiber obtained by the manufacturing method of the present embodiment may be coated with organic matter on the surface thereof, for the purposes such as improvement of adhesiveness between glass fiber and a resin, improvement of uniform dispersibility of glass fiber in a mixture of glass fiber and a resin, and the like. Examples of the organic matter include resins such as urethane resins, epoxy resins, vinyl acetate resins, acrylic resins, modified polypropylene, particularly carboxylic acid-modified polypropylene, and a copolymer of (poly)carboxylic acid, particularly maleic acid and an unsaturated monomer, or silane coupling agents.

The glass long fiber obtained by the manufacturing method of the present embodiment may be coated with a composition including a lubricant, a surfactant, and the like in addition to the resin or the silane coupling agent. Such a composition covers glass long fiber at a rate of 0.1 to 2.0% by mass based on the mass of the glass fiber in a state where it is not coated with the composition.

The glass long fiber is coated with organic matter by applying the sizing agent or the binder to the glass long fiber using a known method such as a roller applicator, for example, in the manufacturing process of the glass long fiber. The sizing agent or binder includes a solution of the resin, the silane coupling agent, or the composition. The glass long fiber can be coated by then by drying the glass fiber to which the solution of the resin, the silane coupling agent, or the composition is applied.

Examples of the silane coupling agent here can include aminosilanes, chlorosilanes, epoxysilanes, mercaptosilanes, vinylsilanes, acrylsilanes, and cationic silanes. As the silane coupling agent, these compounds can be used singly or in combination of two or more.

Examples of the aminosilane include γ-aminopropyltnethoxysilane, N-β-(aminoethyl)-γ-aminopropyltrimethoxysilane, N-β-aminoethyl)-N-β-aminoethyl)-γ-aminopropyltrimethoxysilane, and γ-anilinopropyltrimethoxysilane.

Examples of the chlorosilane include γ-chloropropyltrimethoxysilane.

Examples of the epoxysilane include γ-glycidoxypropyltrimethoxysilane and β-(3,4-epoxy cyclohexyl) ethyltrimethoxysilane.

Examples of the mercaptosilane can include γ-mercaptotrimethoxysilane.

Examples of the vinylsilane include vinyl trimethoxysilane and N-β-(N-vinylbenzylaminoethyl)-γ-aminopropyltrimethoxysilane.

Examples of the acrylsilane include γ-methacryloxypropyltrimethoxysilane.

Examples of the cationic silane include N-(vinylbenzyl)-2-aminoethyl-3-aminopropyltrimethoxysilane hydrochloride and N-phenyl-3-aminopropyltrimethoxysilane hydrochloride.

Examples of the lubricant include modified silicone oils, animal oils and hydrogenated products thereof, vegetable oils and hydrogenated products thereof, animal waxes, vegetable waxes, mineral waxes, condensates of a higher saturated fatty acid and a higher saturated alcohol, polyethyleneimine, polyalkylpolyamine alkylamide derivatives, fatty acid amides, and quaternary ammonium salts. As the lubricant, these can be used singly or in combinations of two or more.

Examples of the animal oil include beef tallow.

Examples of the vegetable oil include soybean oil, coconut oil, rapeseed oil, palm oil, and castor oil.

Examples of the animal wax include beeswax and lanolin.

Examples of the vegetable wax include candelilla wax and carnauba wax.

Examples of the mineral wax include paraffin wax and montan wax.

Examples of the condensate of a higher saturated fatty acid and a higher saturated alcohol include stearates such as lauryl stearate.

Examples of the fatty acid amide include dehydrated condensates of a polyethylenepolyamine such as diethylenetriamine, triethylenetetramine, or tetraethylenepentamine and a fatty acid such as lauric acid, myristic acid, palmitic acid, or stearic acid.

Examples of the quaternary ammonium salt include alkyltrimethylammonium salts such as lauryltrimethylammonium chloride.

Examples of the surfactant can include nonionic surfactants, cationic surfactants, anionic surfactants, and amphoteric surfactants. As the surfactant, these can be used singly or in combination of two or more.

Examples of the nonionic surfactant can include ethylene oxide propylene oxide alkyl ether, polyoxyethylene alkyl ether, polyoxyethylene-polyoxypropyleneblock copolymer, alkyl polyoxyethylene-polyoxypropylene block copolymer ether, polyoxyethylene fatty acid ester, polyoxyethylene fatty acid monoester, polyoxyethylene fatty acid diester, polyoxyethylene sorbitan fatty acid ester, glycerol fatty acid ester ethylene oxide adduct, polyoxyethylene castor oil ether, hydrogenated castor oil ethylene oxide adduct, alkylamine ethylene oxide adduct, fatty acid amide ethylene oxide adduct, glycerol fatty acid ester, polyglycerol fatty acid ester, pentaerythritol fatty acid ester, sorbitol fatty acid ester, sorbitan fatty acid ester, sucrose fatty acid ester, polyhydric alcohol alkyl ether, fatty acid alkanolamide, acetylene glycol, acetylene alcohol, ethylene oxide adduct of acetylene glycol, and ethylene oxide adduct of acetylene alcohol.

Examples of the cationic surfactant can include alkyldimethylbenzylammonium chloride, alkyltrimethylammonium chloride, alkyl dimethyl ethyl ammonium ethyl sulfate, higher alkylamine salts (such as acetates and hydrochlorides), adduct of ethylene oxide to a higher alkylamine, condensate of a higher fatty acid and polyalkylene polyamine, a salt of an ester of a higher fatty acid and alkanolamine, a salt of higher fatty acid amide, imidazoline cationic surfactant, and alkyl pyridinium salt.

Examples of the anionic surfactant can include higher alcohol sulfate salts, higher alkyl ether sulfate salts, α-olefin sulfate salts, alkylbenzene sulfonate salts, α-olefin sulfonate salts, reaction products of fatty acid halide and N-methyl taurine, dialkyl sulfosuccinate salts, higher alcohol phosphate ester salts, and phosphate ester salts of higher alcohol ethylene oxide adduct.

Examples of the amphoteric surfactant can include amino acid amphoteric surfactants such as alkali metal salts of alkylaminopropionic acid, betaine amphoteric surfactants such as alkyldimethylbetaine, and imidazoline amphoteric surfactants. Examples and Comparative Examples of the present invention will be shown.

### Examples

### [Example 1]

In the present example, a glass fiber-reinforced thermoplastic resin molded product was heated at 625°C for 2 hours to bum the thermoplastic resin, and then the remaining glass fiber was recovered. One part by mass of the recovered glass fiber having a loss on ignition of 0.030% by mass and a number average fiber length of 320 µm and 99 parts by mass of a glass fiber mineral material having a designed glass composition corresponding to the E glass composition were mixed to obtain a glass raw material (glass batch). Next, the glass raw material obtained in the present Example was placed in a platinum crucible, the platinum crucible was held in an electric furnace for 4 hours under temperature conditions in the range of 1400 to 1550°C, and the glass raw material was melted with stirring to obtain a homogeneous molten glass. Next, the molten glass obtained in the present Example was poured onto a carbon plate and cooled to obtain a glass cullet mass. Between the composition of the recovered glass fiber and the designed glass composition of the glass fiber mineral material, the total value of the absolute values of the differences in the contents of SiO₂, Al₂O₃, CaO, MgO, StO, B₂O₃, and TiO₂ was 0.60% by mass.

Next, the glass cullet obtained in the present Example was charged into a platinum container equipped with 10 nozzle tips at the bottom, and the platinum container was heated to 1250°C to melt the glass cullet to thereby obtain molten glass. Next, the molten glass was drawn from the nozzle chips of the platinum container and wound to a winding apparatus. Then, spinning was conducted by rotating the winding apparatus to wind the molten glass at a rotation speed of 1100 rpm for an hour, and thus glass long fiber having a fiber diameter of 9.0 µm was manufactured.

Next, chopped strands having a cut length of 3.0 mm were obtained from the glass long fiber were obtained in the present Example, the chopped strands and a nylon 6 resin (manufactured by Ube Industries, Ltd., trade name: UBE1015B) were kneaded with a screw rotation speed of 100 rpm in a twin-screw kneader (manufactured by SHIBAURA MACHINE CO., LTD., trade name: TEM-26SS) to prepare resin pellets having a glass content of 20.0% by mass.

Next, the spinnability, furnace material erodability, and platinum breakability of the molten glass obtained in the present Example, and the workability in injection molding of the glass long fiber obtained in the present Example were evaluated as follows. The results are shown in Table 1.

### [Spinnability of molten glass]

The glass cullet obtained in the present Example was charged into a platinum container, and the platinum container was heated to 1250°C to melt the glass cullet. The obtained molten glass was drawn from the nozzle tips of the platinum container and wound to a winding apparatus. When the winding apparatus was rotated to wind the molten glass at a rotation speed of 1100 rpm for an hour, a case in which spinning was continuously enabled for an hour without cut was evaluated as A, a case in which the number of cut in an hour was 1 to 2 and continuous spinning was enabled for 30 minutes or longer was evaluated as B, and the other cases were evaluated as C.

### [Furnace material erodability of molten glass]

A cylindrically-cut chrome brick was put upright in a platinum boat, and the glass batch was charged therearound and melted at 1500°C for 6 hours. After melting the chrome brick was removed before cooled, and the remaining glass cullet was pulverized and powdered into glass powder. The glass powder was molded into a disk form in a press, and then the disk was subjected to quantitative analysis using a wavelength dispersive X-ray fluorescence analyzer. Among the contents of the components in terms of oxides, a case of the content of chromium oxide of less than 0.20% by mass was evaluated as A, a case of the content of 0.20% by mass or more and less than 0.30% by mass was evaluated as B, and a case of the content of 0.30% by mass or more was evaluated as C.

### [Platinum breakability of molten glass]

The platinum crucible used for melting of the glass raw material was washed with fluoric acid to remove the remaining glass, and then the appearance was observed. A case in which no break (hole) was observed in the appearance was evaluated as A, and a case in which a break was observed was evaluated as B.

### [Workability in glass-resin kneading]

Next, chopped strands having a cut length of 3.0 mm from the glass long fiber were obtained in the present Example, and the chopped strands and a nylon 6 resin (manufactured by Ube Industries, Ltd., trade name: UBE1015B) were kneaded with a screw rotation speed of 100 rpm in a twin-screw kneader (manufactured by SHIBAURA MACHINE CO., LTD., trade name: TEM-26SS). When resin pellets having a glass content of 20.0% by mass were prepared, whether preparation of resin pellets was enabled or not was taken as an index for the workability in glass-resin kneading. A case in which preparation of resin pellets was enabled was evaluated as OK, and a case in which preparation of resin pellets was not enabled was evaluated as No good.

### [Example 2]

In the present Example, a glass raw material (glass batch) was obtained by mixing 10 parts by mass of recovered glass fiber having a loss on ignition of 0.030% by mass recovered in the entirely same manner as in Example 1 from a glass fiber-reinforced thermoplastic resin molded product and 90 parts by mass of a glass fiber mineral material having a designed glass composition corresponding to the E glass composition.

Next, spinning was conducted to manufacture glass long fiber in the entirely same manner as in Example 1 except that the glass raw material obtained in the present Example was used, and resin pellets was prepared in the entirely same manner as in Example 1 except that the glass long fiber obtained in the present Example was used.

Next, the spinnability, furnace material erodability, and platinum breakability of the molten glass were evaluated in the entirely same manner as in Example 1 except that the molten glass obtained in the present Example was used, and the workability in injection molding was evaluated in the entirely same manner as in Example 1 except that the glass long fiber obtained in the present Example was used. The results are shown in Table 1.

### [Example 3]

In the present Example, a glass raw material (glass batch) was obtained by mixing 40 parts by mass of recovered glass fiber having a loss on ignition of 0.030% by mass recovered in the entirely same manner as in Example 1 from a glass fiber-reinforced thermoplastic resin molded product and 60 parts by mass of a glass fiber mineral material having a designed glass composition corresponding to the E glass composition.

Next, spinning was conducted to manufacture glass long fiber in the entirely same manner as in Example 1 except that the glass raw material obtained in the present Example was used, and resin pellets was prepared in the entirely same manner as in Example 1 except that the glass long fiber obtained in the present Example was used.

Next, the spinnability, furnace material erodability, and platinum breakability of the molten glass were evaluated in the entirely same manner as in Example 1 except that the molten glass obtained in the present Example was used, and the workability in injection molding was evaluated in the entirely same manner as in Example 1 except that the glass long fiber obtained in the present Example was used. The results are shown in Table 1.

### [Example 4]

In the present Example, a glass raw material (glass batch) was obtained by mixing 70 parts by mass of recovered glass fiber having a loss on ignition of 0.030% by mass recovered in the entirely same manner as in Example 1 from a glass fiber-reinforced thermoplastic resin molded product and 30 parts by mass of a glass fiber mineral material having a designed glass composition corresponding to the E glass composition.

Next, spinning was conducted to manufacture glass long fiber in the entirely same manner as in Example 1 except that the glass raw material obtained in the present Example was used, and resin pellets was prepared in the entirely same manner as in Example 1 except that the glass long fiber obtained in the present Example was used.

Next, the spinnability, furnace material erodability, and platinum breakability of the molten glass were evaluated in the entirely same manner as in Example 1 except that the molten glass obtained in the present Example was used, and the workability in injection molding was evaluated in the entirely same manner as in Example 1 except that the glass long fiber obtained in the present Example was used. The results are shown in Table 1.

### [Example 5]

In the present Example, a glass raw material (glass batch) was obtained by mixing 10 parts by mass of recovered glass fiber having a loss on ignition of 0.200% by mass recovered in the entirely same manner as in Example 1 from a glass fiber-reinforced thermoplastic resin molded product and 90 parts by mass of a glass fiber mineral material having a designed glass composition corresponding to the E glass composition.

Next, spinning was conducted in the entirely same manner as in Example 1 except that the glass raw material obtained in the present Example was used to manufacture glass long fiber, and resin pellets was prepared in the entirely same manner as in Example 1 except that the glass long fiber obtained in the present Example was used.

Next, the spinnability, furnace material erodability, and platinum breakability of the molten glass were evaluated in the entirely same manner as in Example 1 except that the molten glass obtained in the present Example was used, and the workability in injection molding was evaluated in the entirely same manner as in Example 1 except that the glass long fiber obtained in the present Example was used. The results are shown in Table 1.

### [Example 6]

In the present Example, a glass raw material (glass batch) was obtained by mixing 10 parts by mass of recovered glass fiber having a loss on ignition of 0.400% by mass recovered in the entirely same manner as in Example 1 from a glass fiber-reinforced thermoplastic resin molded product and 90 parts by mass of a glass fiber mineral material having a designed glass composition corresponding to the E glass composition.

Next, spinning was conducted to manufacture glass long fiber in the entirely same manner as in Example 1 except that the glass raw material obtained in the present Example was used, and resin pellets was prepared in the entirely same manner as in Example 1 except that the glass long fiber obtained in the present Example was used.

Next, the spinnability, furnace material erodability, and platinum breakability of the molten glass were evaluated in the entirely same manner as in Example 1 except that the molten glass obtained in the present Example was used, and the workability in injection molding was evaluated in the entirely same manner as in Example 1 except that the glass long fiber obtained in the present Example was used. The results are shown in Table 1.

### [Comparative Example 1]

In the present Comparative Example, resin pellets were prepared in the entirely same manner as in Example 1 except that recovered glass fiber recovered from a glass fiber-reinforced thermoplastic resin molded product in the entirely same manner as in Example 1 was used.

Next, the workability in injection molding was evaluated in the entirely same manner as in Example 1 except that the recovered glass fiber obtained in the present Comparative Example was used. The results are shown in Table 1.

**[Table 1]**

| | Example 1 | Example 2 | Example 3 | Example 4 | Example 5 | Example 6 | Comparative Example 1 |
|---|---|---|---|---|---|---|---|
| Loss on ignition of recovered glass fiber (% by mass) | 0.030 | 0.030 | 0.030 | 0.030 | 0.200 | 0.400 | 0.030 |
| Recovered glass fiber (parts by mass) | 1 | 10 | 40 | 70 | 10 | 10 | - |
| Glass fiber mineral material (parts by mass) | 99 | 90 | 60 | 30 | 90 | 90 | - |
| Spinnability of molten glass | A | A | B | C | A | A | - |
| Furnace material erodability of molten glass | A | A | A | A | B | C | - |
| Platinum breakability of molten glass | A | A | A | A | A | B | - |
| Workability in injection molding | OK | OK | OK | OK | OK | OK | No good |

It is clear from Table 1 that, according to glass long fiber of Examples 1 to 6 manufactured by melting a glass raw material including recovered glass fiber to form molten glass and spinning the molten glass, resin pellets can be prepared, and workability in injection molding is good, but, with the recovered glass fiber of Comparative Example 1, no resin pellets can be prepared and good workability cannot be obtained in injection molding.

## Claims

1. A method for manufacturing glass long fiber, wherein a glass raw material comprising glass fiber recovered from a glass fiber-reinforced resin molded product is melted to form molten glass, and the molten glass is spun to form glass long fiber.

2. The method for manufacturing glass long fiber according to claim 1, wherein the glass raw material comprises the recovered glass fiber in a range of 1 to 50% by mass based on an entire glass raw material.

3. The method for manufacturing glass long fiber according to claim 1 or claim 2, wherein the glass raw material comprises the recovered glass fiber in a range of 5 to 25% by mass based on an entire glass raw material.

4. The method for manufacturing glass long fiber according to any one of claim 1 to claim 3, wherein the recovered glass fiber has a loss on ignition in a range of 0.003 to 0.300% by mass.

5. The method for manufacturing glass long fiber according to any one of claim 1 to claim 4, wherein the recovered glass fiber has a loss on ignition in a range of 0.005 to 0.115% by mass.
